# EUROPEAN PATENT SPECIFICATION

(11) **EP 3 278 169 B1**
(45) Date of publication and mention of the grant of the patent: **04.05.2022**
(21) Application number: 16715768.4
(22) Date of filing: 31.03.2016
(51) Int. Cl.: G02B 27/01, G02B 5/18

(54) **FREEFORM NANOSTRUCTURED SURFACE FOR VIRTUAL AND AUGMENTED REALITY NEAR EYE DISPLAY**
FREIFORM NANOSTRUKTURIERTE OBERFLÄCHE FÜR EINE AUGENNAHE ANZEIGEVORRICHTUNG DER VIRTUELLEN UND ERWEITERTEN REALITÄT
SURFACE NANOSTRUCUTURÉE A FORME LIBRE POUR UN APPARAIL D'AFFICHAGE DE VISION RAPPROCHÉE POUR LA RÉALITÉ VIRTUELLE ET AUGMENTÉE

(30) Priority: 02.04.2015 US 201562142327 P
(43) Date of publication of application: 07.02.2018
(73) Proprietor: University of Rochester, Rochester, NY 14642 (US)
(72) Inventor: ROLLAND, Jannick, Seneca Falls, New York 13148 (US); VAMIVAKAS, Nick, Brighton, New York 14627 (US); KITT, Alexander, Buffalo, New York 14209 (US); BAUER, Aaron, Rochester, New York 14623 (US)
(74) Representative: Flügel Preissner Schober Seidel
(86) International application number: PCT/US2016/025363
(87) International publication number: WO 2016/161175

(56) References cited:
- EP-A2- 1 215 522
- US-A1- 2003 231 395
- US-A1- 2013 242 392
- US-B1- 6 185 045
- Yasuhiro Tamayama ET AL: "Electromagnetically induced transparency like transmission in a metamaterial composed of cut-wire pairs with indirect coupling", Physical Review B, vol. 89, no. 7, 1 February 2014 (2014-02-01), XP055586209, US ISSN: 1098-0121, DOI: 10.1103/PhysRevB.89.075120

## Description

### BACKGROUND

A near-eye display is a wearable device that creates a display in front of a field of vision of a user. The display can be transparent or opaque. For example, a transparent display can overlay information and graphics on top of a view of the real world, while an opaque display presents the viewer with only the information from the near eye display.

US 2013/242392 A1 discloses an eyepiece for a HMD, which includes a waveguide, an ambient light polarizer, and a wire grid polarizer with a diffraction lens having a lens function patterned into the wire grid polarizer. Polarized image light is guided between eye-ward and ambient sides of the waveguide from a display source to a viewing region of the waveguide where the polarized image light is directed out of the waveguide through the eye-ward side.

A wearable display system having a display panel for outputting a signal processed a predetermined way is known from EP 1 215 522 A2. US 6 185 045 B1 discloses a head-mounted image display apparatus capable of displaying an image with dynamic presence even if the observation field angle is not wide.US 2003/231395 A1 discloses a diffractive optical element of the blazed-binary grating type, with which a high diffraction efficiency can be achieved over substantially the entire used wavelength region.

### SUMMARY

According to aspects illustrated herein, there is provided a near eye display assembly comprising an image source and at least one of a combiner, a mirror, and a waveguide optically coupled to the image source, wherein the at least one of the combiner, the mirror and the waveguide includes a freeform nanostructured surface having a meta-grating at least partially defined by a unit cell having a plurality of meta-atoms. Each of the meta-atoms in the unit cell has a different length to width ratio. The combiner or the waveguide are adapted to convey image information from outside a field of view of a viewer into the field of view of the viewer. The combiner and the secondary mirror are in an off-axis folded geometry. The freeform property of the nanostructured surface is either configured to correct optical aberrations induced by tilting and decentering of the first reflective surface and the second reflective surface, or aspects of the nanostructured surface are used to couple light into or out of the waveguide. The meta-grating is further configured to provide at least 50% +1 diffraction order Transverse Electric polarized absolute grating efficiency at a desired wavelength of the visible light spectrum in reflection, within a range of operation of an angle of incidence that spans about 20°.

According to further aspects illustrated herein, the freeform nanostructured surface encompasses a freeform surface, a nanostructured surface or a combination of both the freeform surface and the nanostructured surface.

According to further aspects illustrated herein, the near eye display has the combiner and the secondary mirror operably connected to the combiner wherein at least one of the combiner and the secondary mirror includes a meta-grating at least partially defined by a unit cell having a plurality of meta-atoms.

According to another aspect, the near eye display assembly has a frame releasably engaging a head of a wearer; the combiner operably connected to the frame and the secondary mirror operably connected to one of the combiner and the frame, wherein at least one of the combiner and the secondary mirror includes a freeform nanostructure surface having a meta-grating at least partially defined by a unit cell having a plurality of meta-atoms, the meta-atoms within the unit cell having different length to width ratios and sized and spaced to provide an efficiency of at least 50% over a majority of the visible light spectrum.

According to further aspects, the near eye display assembly has a frame; the combiner operably connected to the frame as a first reflective surface and the secondary mirror operably connected to the frame as a second reflective surface, each of the combiner and the secondary mirror including a freeform nanostructured surface, wherein the underlying surface shape may be freeform or the nanostructure overlaid on the surface itself can create a freeform surface, or combination thereof, and wherein the freeform property is configured to correct optical aberrations induced by a tilting and decentering of the first reflective surface and the second reflective surface.

### BRIEF DESCRIPTION OF THE DRAWINGS

Figures 1a and 1b schematically illustrate a first aspect of a near eye display incorporating a meta-grating.
Figures 2a and 2b schematically illustrate a second aspect of a near eye display incorporating a meta-grating.
Figures 3a and 3b schematically illustrate a third aspect of a near eye display incorporating a meta-grating.
Figures 4a and 4b schematically illustrate a fourth aspect of a near eye display incorporating a meta-grating.
Figure 5 is a top plane view of unit cell of the meta-grating.
Figure 6 is a side cross-section view of the unit cell of Figure 5.
Figure 7 is a plot of the individual responses of the four meta-atoms of the unit cell of Figure 5 showing the amplitude for a normally incident plane wave on a uniform periodic array of four meta-atoms versus wavelength.
Figure 8 is a plot of the individual responses of the four meta-atoms of the unit cell of Figure 5 showing the phase of the complex reflection coefficient, r = |*r* |*e*^{*i*Ø}, for a normally incident plane wave on a uniform periodic array of four meta-atoms versus wavelength.
Figure 9 is a plot of the absolute efficiencies predicted based on the reflectivities versus wavelength.
Figure 10 is a comparison of m=+1 simulated absolute grating efficiencies for a ruled-grating and the meta-grating as a function of polarization, incident angle and wavelength.
Figure 11 is the efficiency of the meta-grating as a function of incidence angle detailing wide field of view.
Figure 12 is a schematic representation of an aspect of the near eye display employing a waveguide.

### DETAILED DESCRIPTION

A near-eye display presents image information to a viewer within viewing pupils (also referred to as "eyeboxes"), which when aligned with the pupils of the eyes of the viewer, produce virtual images within the field of view of the viewer. Combiners, or waveguides, of near-eye displays convey image information toward the eyes of the viewers from positions outside the field of view of the viewer. The image information conveyed by the combiner, or waveguides, can have an angularly encoded form for projecting virtual images into the eyes of the viewer.

The combiner is an optical apparatus that combines two images together, from either the same side of the combiner (reflective/reflective, or transmissive/transmissive) or from the two different sides of the combiner (reflective/transmissive). Combiners can be used in heads up displays ("HUDs"), sometimes referred to as head mounted displays ("HMDs") or near-to-eye displays, which allow a user to view a computer generated image ("CGI") superimposed over an external view. The HUD enables the user to view the CGI without having to look away from his usual viewpoint.

Generally, there are two versions of combiners. The first version combines two fields without adding any lensing to either field (such as a tilted dichroic plate). The second version includes a lensing functionality, in addition to the combining functionality, which can be an all-spherical, off-axis conic, aspheric, or freeform lensing for the field coming from the display. The lensing functionality is used to displace the virtual image originating from the display into the far field or at a specific distance from the combiner and to give the image a certain field of view to enable the user to bring the virtual image into focus at the target size. The lensing functionality is configured to provide adequate correction of the optical aberrations throughout the field of view being displayed. The lensing functionality may also be configured to provide ophthalmic correction for individual users.

The waveguides, sometimes called light guides, include but are not limited to diffractive, holographic, polarized or reflective waveguides. Aspects of the nanostructured surface can be used to couple light into and/or out of the waveguide.

The image information originates outside the field of view of the viewer, such as along the temples of eyeglass frames. Electronic video display data is converted into the image information by an image source or generator, such as an optical pattern generator, including but not limited to spatial light modulators, combined with focusing optics that angularly transform the spatial patterns or by scanning optics that directly generate angular transforms of spatial patterns. The image source encompasses any device for creating or transmitting a light pattern to the combiner. The image source includes image generators such as, but not limited to laser scanning source generators based on Light Emitting Diodes (LEDs) and Vertical Cavity Surface-Emitting Lasers (VCSELs), microdisplays, including but not limited to liquid crystal displays, either reflective or transmissive displays, and Organic Light-Emitting Diode (OLEDs), which may also be combined with an anamorphic or freeform optical element or lens within the scanning optical path or located close or against the microdisplay to control optical aberrations. A nonsymmetric surface with bi-axial symmetry is referred as an anamorphic surface. A nonsymmetric surface whose asymmetry goes beyond bi-axial symmetry or toroidal shape is a freeform surface. Thus, the image source can include an emissive microdisplay, such as an OLED display, and/or a reflective microdisplay, such as an LCoS (Liquid Crystal on Silicon) display or DLP (Digital Light Processing) device. In certain aspects, a separate microdisplay may be utilized for each color of light displayed, while in other aspects a single microdisplay may be utilized (e.g. by displaying a color field sequential image). Likewise, in some aspects, separate image sources may be utilized for the left and right eye of a viewer. This may facilitate the display of stereoscopic images. In such aspects, separate combiners may be used to produce separate left-eye and right-eye images.

The combiner, or waveguide, can be operably connected to eyeglasses that can be worn on the head of a viewer. The eyeglasses include a frame having left and right temples that rest over the ears and a nose piece that rests over the nose. The frame is shaped and sized to position each optical combiner, or waveguide, in front of a corresponding eye of the viewer. It is understood, other frames having other shapes may be used (e.g., a visor with ear arms and a nose bridge support, a single contiguous headset member, a headband, goggle type eyewear, etc.). The term eyeglass includes corrective lenses, sunglasses, protective lenses, frames with or without lenses or with or without corrective lenses, as well as any other head mount for operably locating and maintaining the near eye display within the field of view of the viewer. Thus, the eyeglasses can locate the secondary mirror proximal to the combiner or spaced apart from the combiner.

The combiner, or waveguide, can be operably connected to the frames in place of or in addition to eyeglass lenses, and convey the image information from outside the field of view of the viewer into the field of view of the viewer in a form that minimizes the thicknesses of the near-eye displays in front of the eyes of the viewer. The combiner occupies a limited volume of space corresponding to the space within which eyeglass lenses are normally held within the eyeglass frames. That is, the combiner may be a surface off which light bounces that can be limited in thickness (i.e., depth) to more closely resemble the dimensions of conventional eyewear. The waveguide may be flat or curved, with freeform nanostructured surfaces coupling light into the waveguide.

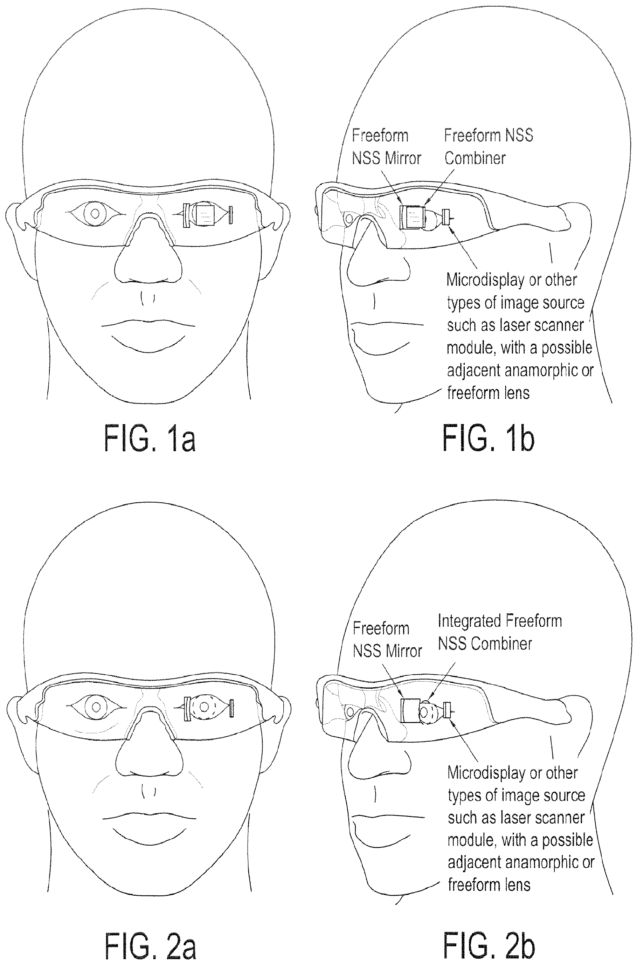

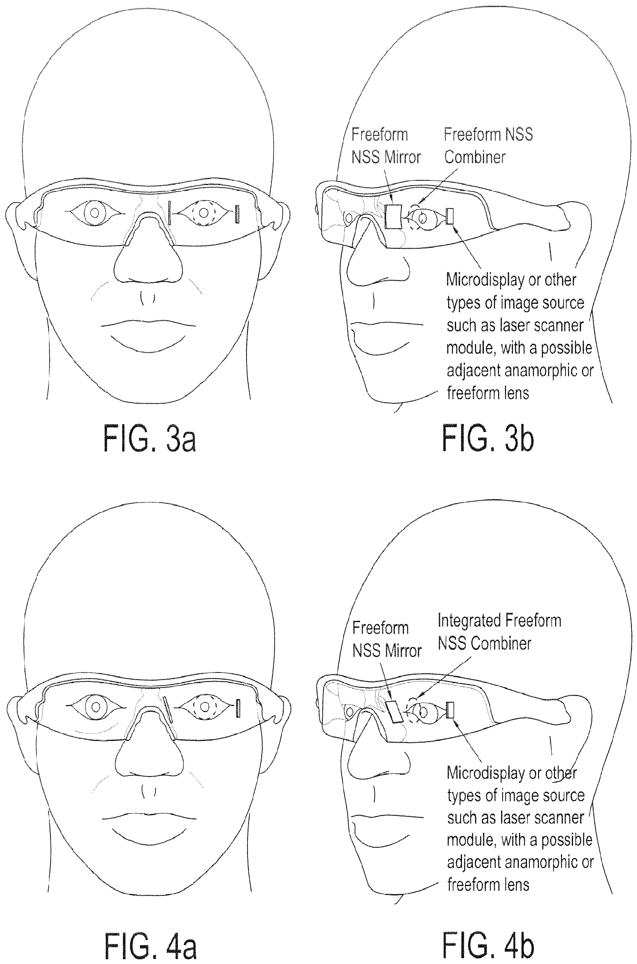

A near eye display assembly incorporating a combiner together with a secondary freeform mirror, including nanostructured surfaces, and an image source is illustrated in Figures 1-4. Figures 1-4 illustrate a variety of geometries of the near eye display including a base geometry of Figures 1a and 1b; a base geometry with a combiner in Figures 2a and 2b; a geometry, wherein a freeform mirror is located proximal to the nose in Figures 3a and 3b and a geometry of the near eye display, wherein a freeform mirror is conformal in Figures 4a and 4b. In Figure 1, the image source is optically coupled to the combiner and the secondary mirror. In one aspect, the combiner, the secondary mirror and the image source define a folded geometry of a connecting optical path. In a further aspect, an optical element such as, but not limited to spherical, aspheric, anamorphic, anamorphic aspheric, or freeform optics or lens can be optically intermediate to the image source and the freeform nanostructured mirror, the waveguide or the combiner.

The near eye display can include two reflective surfaces, the combiner and the secondary mirror wherein the combiner and the secondary mirror are in an off axis folded geometry. In one aspect, each of the combiner and the secondary mirror include a freeform nanostructured surface. In another aspect, both the combiner and the secondary mirror can include a freeform surface, a nanostructured surface or a combination of both the freeform surface and the nanostructured surface.

It is understood the near eye display can include additional optics, such as but not limited to a lens in the optical path of the source generator. The lens or additional optics may be all-spherical, aspheric, anamorphic, anamorphic aspheric, or freeform, or combination of all-spherical, aspheric, anamorphic, anamorphic aspheric or freeform.

While aspects of the near eye display assembly are set forth for purposes of description in terms of particular aspects of the freeform nanostructured surface as combinations of the freeform surface, the nanostructured surface or the combination of both the freeform surface and the nanostructured surface, it is understood, the combiner and the secondary mirror can be independently configured to have a freeform nanostructured surface as the freeform surface, the nanostructured surface or the combination of both the freeform surface and the nanostructured surface.

Generally, the freeform surface is used to correct optical aberrations induced by tilting and decentering of the reflective surfaces in a folded geometry. As used herein, a freeform optical surface is any rotationally nonsymmetric surface whose asymmetry goes beyond bi-axial symmetry or toroidal shape. A freeform surface may be parameterized by normalized basis functions such as the phi-polynomials (e.g. Zernike sets, Q-polynomials, other sets of orthogonal polynomials, XY polynomials, Radial Basis Functions, Splines, or Non-Uniform Rational Basis Spline (NURBS). As used herein, a surface with bi-axial symmetry is referred to as an anamorphic surface.

The nanostructured surface provides for wavefront control. A nanostructured surface is a surface or substrate in which the typical features have dimensions in the range about 1-200 nm.

At least one and in selected aspects both the combiner and the secondary mirror include a meta-grating as the nanostructured surface. In a further aspect, the meta-grating controls the wavefront across the visible spectrum. The engineered structure of the unit cells and the substructures within each unit cell can create a type of freeform surface as well. That is, the freeform surface can be the meta-grating surface itself or in combination with the freeform substrate.

The meta-grating is formed of a plurality of unit cells, wherein each unit cell includes a plurality of meta-atoms. The sizing and spacing of the meta-atoms at least partially determines the operating characteristics of the meta-grating. In one aspect, the meta-grating is configured as an 1800 lines/mm visible spectrum meta-grating.

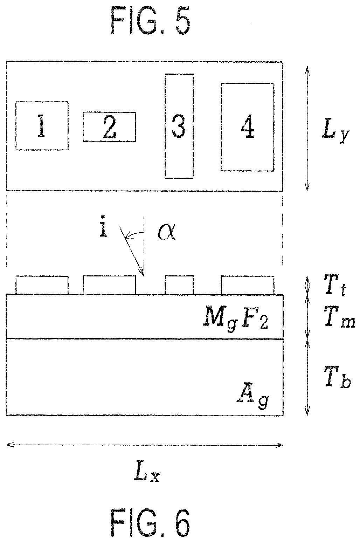

Referring to Figures 5 and 6, a unit cell of an 1800 lines/mm visible spectrum meta-grating is shown. As shown in Figures 5 and 6, the unit cell can include four meta-atoms. In Figure 5, the meta-atoms are number 1-4, in order of decreasing phase.

In one aspect, the unit cell includes three layers - a base layer, a dielectric layer and a meta-atom layer. The dielectric layer is supported by the base layer and the meta-atom layer is supported by the dielectric layer.

The base layer is a metal layer, such as silver. The dielectric layer is formed of magnesium fluoride. As set forth in the table below, the base layer has a thickness of approximately 130 nm and the dielectric layer has a thickness of approximately 75 nm. To ensure both reflectivity and transmissivity, the meta-grating device is perforated with an aperture pattern and sizing that allows the transmission of light through the meta-grating. The perforations are sufficient to render the device substantially transparent to the viewer.

The dimensions of the meta-atoms in the unit cell of an 1800 lines/mm visible spectrum meta-grating having four meta-atoms are set forth in the table below and as labelled in Figures 5 and 6.

| | |
|---|---|
| Lₓ | 555.5 nm |
| L_{y} | 221 nm |
| T_{b} | 130 nm |
| Tₘ | 75 nm |
| Tₜ | 30 nm |
| l₁ | 84.6 nm |
| w₁ | 105 nm |
| l₂ | 47.7 nm |
| w₂ | 105 nm |
| l₃ | 177 nm |
| w₃ | 50 nm |
| l₄ | 150 nm |
| w₄ | 105 nm |

In one aspect, manufacturing considerations are eased by the configuration of the unit cell having each dimension of each meta-atom and the spacing between adjacent meta-atoms be greater than approximately 10 nm and less than approximately 80 nm. In some aspects, the minimum manufacturing dimension of a meta-atom dimension or spacing between adjacent meta-atoms is greater than approximately 25 nm and less than approximately 60 nm. However, it is understood manufacturing processes may enable the configuration of the unit cell to include dimensions of approximately 1 nm.

It is contemplated in the off-axis folded geometry of a near eye display, that either one or both the combiner and the secondary mirror include a freeform nanostructured surface having a freeform surface as well as a nanostructured surface, such as the meta-grating.

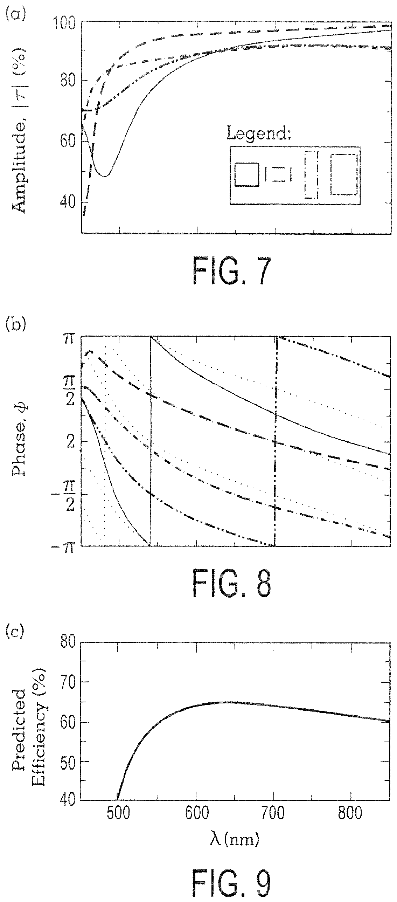

As seen in Figure 7, all four meta-atoms exhibit amplitudes greater than 80% for wavelengths longer than 575 nm. Across most of the spectral range, the phase difference between the second, third and fourth meta-atom is consistent.

In Figure 8, the most solid line represents the ideal 2 *π* /4, phase difference between adjacent meta-atoms using the fourth meta-atom as a baseline.

The wavelength dependent efficiency of the meta-grating generally qualitatively agrees with the predicted efficiencies of Figure 9. The efficiency increases toward the red as the individual meta-atom efficiency increases then decreases for the longer wavelengths where the phase spacing between the meta-atoms degrades. The angle dependencies are similar in shape to the TE-polarized ruled-grating efficiencies and the maximum follows for the condition α = *β*. This suggests that the origin is the variation in accrued propagation phase.

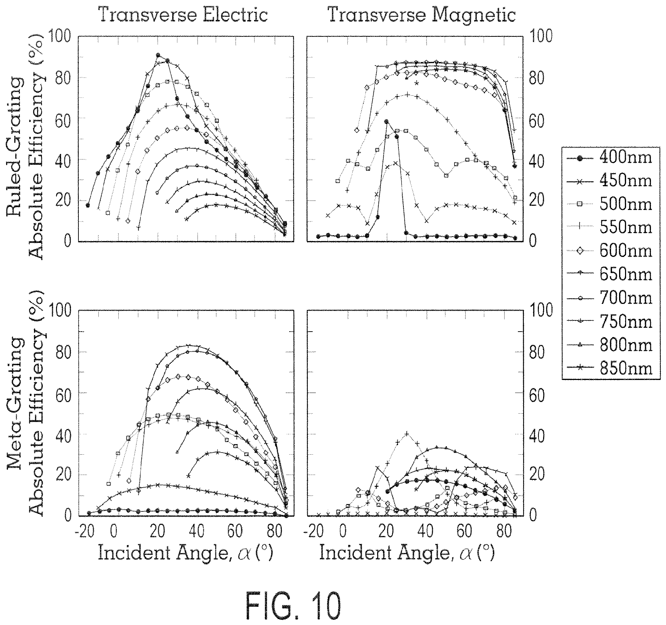

Figure 10 is a plot of the simulated m=+1 absolute grating efficiencies of the meta-grating and a ruled-grating versus incident angle for Transverse Electric (TE) and Transverse Magnetic (TM). Each curve illustrated in the plot represents an incident angle dependent response for a single wavelength and spans only those incident angles that result in diffraction angles less than 90°. The simulations were performed by illuminating the periodic surface with a plane wave with incident angle α and then projecting the reflected fields into the far field to determine grating efficiencies.

Overall, meta-grating TE-polarized efficiencies are higher than the ruled-grating TE polarized efficiencies for wavelengths longer than 600 nm and is competitive with the TM polarized efficiencies for wavelengths between 500 nm and 650 nm.

The meta-grating exhibits sensitivity in polarization response, as compared to a ruled grating of 1800 lines/mm. The electric field of the transverse magnetic polarization is not aligned with the meta-atoms and thus does not excite the resonances that create wavefront modulation.

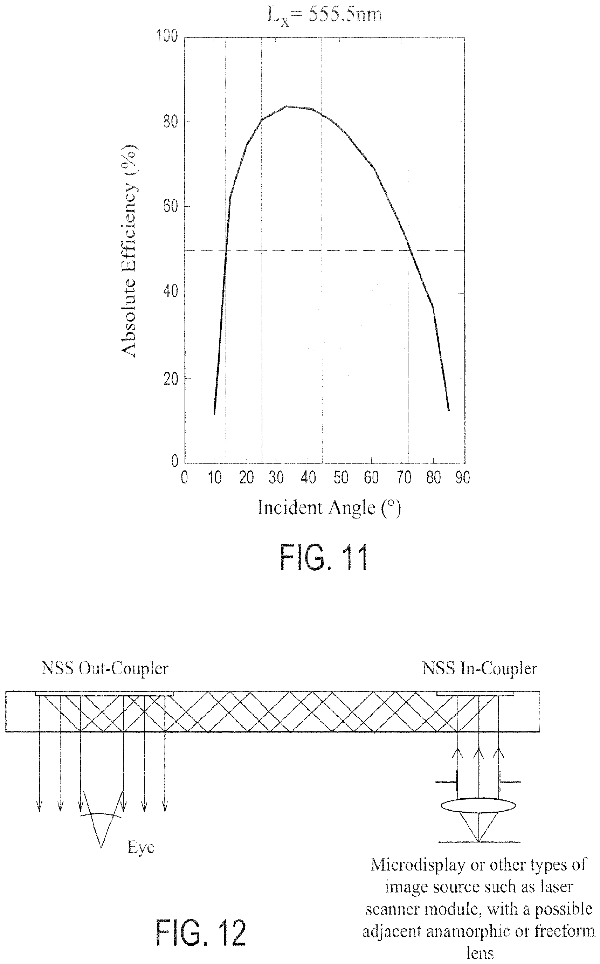

Referring to Figure 11, the diffraction efficiency as a function of incidence angle with a unit cell having a length of about 555.5 nm and the meta-atoms set forth in the above table at an illumination wavelength of 650 nm. As seen in Figure 11, the dotted horizontal line represents an approximately 50% efficiency, wherein the inner shaded region corresponds to a 20° field of view and the outer shaded region corresponds to a 60° field of view. Thus, the meta-grating provides an efficiency of at least approximately 50% over a majority of the visible light spectrum. It is understood the meta-grating can be configured to provide a given predetermined efficiency, such as for example less than 50%. In this way, the meta-grating can provide an efficiency of at least approximately 20%, or 30%, or 40% or 50% over a majority of the visible light spectrum.

In one aspect, the meta-grating is configured to provide at least approximately 50% efficiency at the desired wavelengths in reflection, and as a function of the angle of incident light on the meta-grating, within a range of operation that spans about 20° and up to 80° in alternative geometries. It is understood the mean angle of incidence varies for different geometries of the unit cell.

The freeform component is selected to correct optical aberrations induced by tilting and decentering reflective surfaces, as off-axis in a folded compact geometry. A freeform surface may be parameterized by normalized basis functions such as the phi-polynomials (e.g. Zernike sets, Q-polynomials, other sets of orthogonal polynomials, XY polynomials, Radial Basis Functions, Splines, or NURBS).

Referring to Figure 12, the waveguide is shown with a nanostructured surface in an in -coupler to the waveguide and in an out-coupler to the waveguide.

In manufacture, it is anticipated the meta-gratings of the nanostructured surface replace the required height profile control and period control that can create problems in ruled-gratings with the two dimensional binary surface control used in producing meta-gratings. As set forth above, the dimensions necessary for a meta-grating configured as an 1800 lines/mm visible surface can be greater than approximately 10 nm. While necessary dimensions greater than approximately 10 nm can assist in manufacturing, if manufacturing processes can provide for manufacture of the dimensions on the order of 1 nm, then the nanostructured surface can employ dimensions of at least approximately 1 nm.

The freeform optical surfaces can be designed with commercially available software, such as CODE V optical design software from Synopsys, Inc. of California and fabricated with commercially available equipment such as, but not limited to, a slow or fast tool servo on a Diamond Turning or Milling Machine. Freeform surfaces may also be molded out of a fabricated master.

Thus, a virtual or augmented reality head mounted display is provided, wherein at least one reflective surface is freeform, nanostructured surfaces such as the described meta-grating or a combination of a freeform surface and a nanostructured surface such as the meta-grating. Thus, in an aspect wherein the freeform nanostructured surface encompasses the freeform surface, the nanostructured surface or the combination of both the freeform surface and the nanostructured surface, the near eye display assembly includes a combiner or a combiner and a secondary mirror operably connected to the combiner, wherein at least one of the combiner and the secondary mirror include a freeform nanostructured surface. In one aspect, both the combiner and the secondary mirror include a freeform nanostructured surface.

In a further aspect, a virtual or augmented reality near eye display is provided with a waveguide, wherein at least one optical surface in the waveguide is a nanostructured surface, such as the meta-grating.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art when falling under the scope of the appended claims.

## Claims

1. A near eye display assembly comprising:
(a) an image source; and
(b) a combiner as a first reflective surface and a secondary mirror optically coupled to the combiner as a second reflective surface, or a waveguide optically coupled to the image source;
wherein the combiner or the waveguide are adapted to convey image information from outside a field of view of a viewer into the field of view of the viewer;
wherein the combiner and the secondary mirror are in an off-axis folded geometry;
wherein at least one of the combiner, the secondary mirror, and the waveguide includes a freeform nanostructured surface having a meta-grating at least partially defined by a unit cell having a plurality of meta-atoms, whereby each of the meta-atoms in the unit cell has a different length to width ratio;
wherein the freeform property of the nanostructured surface is either configured to correct optical aberrations induced by tilting and decentering of the first reflective surface and the second reflective surface, or aspects of the nanostructured surface are used to couple light into or out of the waveguide; and
wherein the meta-grating is further configured to provide at least 50% +1 diffraction order Transverse Electric polarized absolute grating efficiency at a desired wavelength of the visible light spectrum in reflection, within a range of operation of an angle of incidence that spans about 20°.

2. The near eye display assembly of claim 1, wherein the unit cell includes at least four meta-atoms.

3. The near eye display assembly of claim 1 or 2, wherein the meta-grating is selected to have at least 20% +1 diffraction order Transverse Electric polarized absolute grating efficiency across a majority of the visible spectrum in reflection, within a range of operation of an angle of incidence that spans about 20°.

4. The near eye display assembly of any one of claims 1 to 3, wherein the near eye display assembly comprises the combiner and the secondary mirror.

5. The near eye display assembly of any one of claims 1 to 4, wherein each of the meta-atoms has a dimension greater than 1 nm, preferably a dimension greater than 10 nm.

6. The near eye display assembly of any one of claims 1 to 5, comprising a combiner which includes a multitude of apertures sized and spaced to render the combiner substantially transparent to a viewer.

7. The near eye display assembly of any one of claims 1 to 6, wherein the meta-grating is selected to have at least 20% +1 diffraction order Transverse Electric polarized absolute grating efficiency over a majority of the visible light spectrum in reflection across at least a 60° incident angle.

8. The near eye display assembly of any one of claims 1 to 7, comprising a combiner having a first reflective surface and a secondary mirror having a second reflective surface, wherein both the combiner and the secondary mirror include a freeform surface.

9. The near eye display assembly of any one of claims 1 to 8, wherein the unit cell has a length of approximately 555.5 nm and a width of approximately 221 nm,
wherein a first meta-atom has a length of approximately 105 nm and a width of approximately 84.6 nm, a second meta-atom has a length of approximately 105 nm and a width of approximately 47.7 nm, a third meta-atom has a length of approximately 50 nm and a width of approximately 177 nm and a fourth meta-atom has a length of approximately 105 nm and a width of approximately 150 nm.

10. The near eye display assembly of claim 1, wherein the nanostructured surface includes a freeform surface.

11. The near eye display assembly of claim 1, comprising a frame releasably engaging a head of a wearer, and the combiner having a first reflective surface and the secondary mirror having a second reflective surface operably connected to the frame;
wherein at least one of the combiner and the secondary mirror includes a nanostructured surface having a meta-grating at least partially defined by a unit cell having a plurality of meta-atoms, the meta-atoms within the unit cell having different length to width ratios and sized and spaced to provide a given predetermined +1 diffraction order Transverse Electric absolute grating efficiency over a majority of the visible light spectrum in reflection,
wherein preferably the image source is optically coupled to the secondary mirror along an optical path and further comprising an optical element in the optical path, wherein the optical element is one of a spherical, aspheric, anamorphic, anamorphic aspheric, or freeform optic or lens, and
wherein further preferably the unit cell has four meta-atoms, each having a different length to width ratio.

12. The near eye display assembly of claim 11, wherein each of the combiner and the secondary mirror includes a nanostructured surface having a meta-grating at least partially defined by a unit cell having a plurality of meta-atoms, the meta-atoms within the unit cell having different length to width ratios and sized and spaced to provide an +1 diffraction order Transverse Electric absolute grating efficiency of at least 20% over a majority of the visible light spectrum in reflection, and
wherein preferably the nanostructured surface comprises a combination of both a freeform surface and a nanostructured surface.

13. The near eye display assembly of claim 1, comprising: a frame;
wherein the combiner operably connected to the frame as a first reflective surface; and the secondary mirror operably connected to the frame as a second reflective surface;
wherein each of the combiner and the secondary mirror including a freeform nanostructured surface, wherein the freeform component corrects optical aberrations induced by a tilting and decentering of the first reflective surface and the second reflective surface;
wherein preferably the freeform nanostructured surface comprises a combination of a freeform surface and a nanostructured surface.

14. The near eye display assembly of claim 1, comprising the waveguide optically coupled to the image source.

## Patentansprüche

1. Augennahe Anzeigevorrichtung, die Folgendes umfasst:
(a) eine Bildquelle; und
(b) einen Kombinerer als erste reflektierende Oberfläche und einen Sekundärspiegel, der optisch mit dem Kombinierer als zweite reflektierende Oberfläche gekoppelt ist, oder einen Wellenleiter, der optisch mit der Bildquelle gekoppelt ist;
wobei der Kombinierer oder der Wellenleiter so ausgelegt sind, dass sie Bildinformationen von außerhalb eines Sichtfeldes eines Betrachters in das Sichtfeld des Betrachters übertragen;
wobei der Kombinierer und der Sekundärspiegel in einer außeraxial gefalteten Geometrie vorliegen;
wobei mindestens einer von dem Kombinierer, dem Sekundärspiegel und dem Wellenleiter eine nanostrukturierte Freiformoberfläche mit einem Metagitter aufweist, das mindestens teilweise durch eine Einheitszelle mit einer Vielzahl von Meta-Atomen definiert ist, wobei jedes der Meta-Atome in der Einheitszelle ein unterschiedliches Verhältnis von Länge zu Breite aufweist;
wobei die Freiform-Eigenschaft der nanostrukturierten Oberfläche entweder so konfiguriert ist, dass sie optische Aberrationen korrigiert, die durch Kippen und Dezentrieren der ersten reflektierenden Oberfläche und der zweiten reflektierenden Oberfläche induziert werden, oder Aspekte der nanostrukturierten Oberfläche verwendet werden, um Licht in den oder aus dem Wellenleiter einzukoppeln; und
wobei das Metagitter ferner so konfiguriert ist, dass es bei einer gewünschten Wellenlänge des sichtbaren Lichtspektrums in Reflexion innerhalb eines Betriebsbereichs eines Einfallswinkels, der sich über etwa 20° erstreckt, eine transversal elektrisch polarisierte absolute Gittereffizienz von mindestens 50 % +1 Beugungsordnung bereitstellt.

2. Augennahe Anzeigevorrichtung nach Anspruch 1, wobei die Einheitszelle mindestens vier Meta-Atome enthält.

3. Augennahe Anzeigevorrichtung nach Anspruch 1 oder 2, wobei das Meta-Gitter so ausgewählt ist, dass es über einen Großteil des sichtbaren Spektrums in Reflexion eine transversal elektrisch polarisierte absolute Gittereffizienz von mindestens 20 % +1 Beugungsordnung aufweist, und zwar innerhalb eines Betriebsbereichs eines Einfallswinkels, der sich über etwa 20° erstreckt.

4. Die augennahe Anzeigevorrichtung nach einem der Ansprüche 1 bis 3, wobei die augennahe Anzeigevorrichtung den Kombinierer und den Sekundärspiegel umfasst.

5. Die augennahe Anzeigevorrichtung nach einem der Ansprüche 1 bis 4, wobei jedes der Meta-Atome eine Abmessung von mehr als 1 nm, vorzugsweise eine Abmessung von mehr als 10 nm, aufweist.

6. Die augennahe Anzeigevorrichtung nach einem der Ansprüche 1 bis 5, die einen Kombinierer umfasst, der eine Vielzahl von Öffnungen enthält, die so bemessen und beabstandet sind, dass der Kombinierer für einen Betrachter im Wesentlichen transparent ist.

7. Die augennahe Anzeigevorrichtung nach einem der Ansprüche 1 bis 6, wobei das Meta-Gitter so ausgewählt ist, dass es eine transversal elektrisch polarisierte absolute Gittereffizienz von mindestens 20 % +1 Beugungsordnung über einen Großteil des sichtbaren Lichtspektrums bei Reflexion über einen Einfallswinkel von mindestens 60° aufweist.

8. Die augennahe Anzeigevorrichtung nach einem der Ansprüche 1 bis 7, die einen Kombinierer mit einer ersten reflektierenden Oberfläche und einen Sekundärspiegel mit einer zweiten reflektierenden Oberfläche umfasst, wobei sowohl der Kombinierer als auch der Sekundärspiegel eine Freiformfläche aufweisen.

9. Augennahe Anzeigevorrichtung nach einem der Ansprüche 1 bis 8, wobei die Einheitszelle eine Länge von etwa 555,5 nm und eine Breite von etwa 221 nm aufweist,
wobei ein erstes Meta-Atom eine Länge von ungefähr 105 nm und eine Breite von ungefähr 84,6 nm hat, ein zweites Meta-Atom eine Länge von ungefähr 105 nm und eine Breite von ungefähr 47,7 nm hat, ein drittes Meta-Atom eine Länge von ungefähr 50 nm und eine Breite von ungefähr 177 nm hat und ein viertes Meta-Atom eine Länge von ungefähr 105 nm und eine Breite von ungefähr 150 nm hat.

10. Die augennahe Anzeigevorrichtung nach Anspruch 1, wobei die nanostrukturierte Oberfläche eine Freiformfläche aufweist.

11. Augennahe Anzeigevorrichtung nach Anspruch 1, die einen Rahmen umfasst, der lösbar mit dem Kopf eines Trägers in Eingriff kommt, und wobei der Kombinierer eine erste reflektierende Oberfläche aufweist und der Sekundärspiegel eine zweite reflektierende Oberfläche aufweist, die funktionell mit dem Rahmen verbunden ist;
wobei zumindest der Kombinierer oder der Sekundärspiegel eine nanostrukturierte Oberfläche mit einem Metagitter aufweist, das zumindest teilweise durch eine Einheitszelle mit einer Vielzahl von Meta-Atomen definiert ist, wobei die Meta-Atome innerhalb der Einheitszelle unterschiedliche Längen-/Breitenverhältnisse aufweisen und so bemessen und beabstandet sind, dass sie eine gegebene vorbestimmte absolute transversalelektrische Gittereffizienz der Beugungsordnung +1 über einen Großteil des sichtbaren Lichtspektrums in Reflexion liefern,
wobei vorzugsweise die Bildquelle optisch mit dem Sekundärspiegel entlang eines optischen Weges gekoppelt ist und ferner ein optisches Element in dem optischen Weg umfasst, wobei das optische Element eine sphärische, asphärische, anamorphe, anamorph-asphärische oder freiförmige Optik oder Linse ist, und
wobei ferner vorzugsweise die Einheitszelle vier Meta-Atome aufweist, die jeweils ein unterschiedliches Verhältnis von Länge zu Breite haben.

12. Augennahe Anzeigevorrichtung nach Anspruch 11, wobei sowohl der Kombinierer als auch der Sekundärspiegel eine nanostrukturierte Oberfläche mit einem Meta-Gitter aufweisen, das zumindest teilweise durch eine Einheitszelle mit einer Vielzahl von Meta-Atomen definiert ist, wobei die Meta-Atome innerhalb der Einheitszelle unterschiedliche Verhältnisse von Länge zu Breite aufweisen und so dimensioniert und beabstandet sind, dass sie eine absolute transversalelektrische Gittereffizienz +1 Beugungsordnung von mindestens 20 % über einen Großteil des sichtbaren Lichtspektrums in Reflexion bieten, und
wobei die nanostrukturierte Oberfläche vorzugsweise eine Kombination aus sowohl einer Freiformoberfläche als auch einer nanostrukturierten Oberfläche umfasst.

13. Die augennahe Anzeigevorrichtung nach Anspruch 1, umfassend: einen Rahmen;
wobei der Kombinierer mit dem Rahmen als eine erste reflektierende Oberfläche betriebsfähig verbunden ist; und der Sekundärspiegel mit dem Rahmen als eine zweite reflektierende Oberfläche betriebsfähig verbunden ist;
wobei sowohl der Kombinierer als auch der Sekundärspiegel eine nanostrukturierte Freiformfläche aufweisen, wobei die Freiformkomponente optische Aberrationen korrigiert, die durch ein Kippen und Dezentrieren der ersten reflektierenden Fläche und der zweiten reflektierenden Fläche verursacht werden;
wobei vorzugsweise die frei geformte nanostrukturierte Oberfläche eine Kombination aus einer frei geformten Oberfläche und einer nanostrukturierten Oberfläche umfasst.

14. Die augennahe Anzeigevorrichtung nach Anspruch 1, die den Wellenleiter umfasst, der optisch mit der Bildquelle gekoppelt ist.

## Revendications

1. Ensemble d'affichage proche de l'oeil comprenant :
(a) une source d'image; et
(b) un combineur en tant que première surface réfléchissante et un miroir secondaire couplé optiquement au combineur en tant que seconde surface réfléchissante, ou un guide d'ondes couplé optiquement à la source d'image;
dans lequel le combineur ou le guide d'ondes sont adaptés pour transporter des informations d'image de l'extérieur d'un champ de vision d'un observateur dans le champ de vision de l'observateur;
dans lequel le combineur et le miroir secondaire sont dans une géométrie pliée hors axe;
dans lequel au moins l'un du combineur, du miroir secondaire et du guide d'ondes comprend une surface nanostructurée de forme libre ayant une méta-réseau au moins partiellement définie par une cellule unitaire ayant une pluralité de méta-atomes, de sorte que chacun des méta-atomes dans la cellule unitaire a un rapport longueur/largeur différent;
dans lequel la propriété de forme libre de la surface nanostructurée est configurée pour corriger les aberrations optiques induites par l'inclinaison et le décentrage de la première surface réfléchissante et de la seconde surface réfléchissante, soit les aspects de la surface nanostructurée sont utilisés pour coupler la lumière dans ou hors du guide d'ondes; et
dans lequel le méta-réseau est en outre configuré pour fournir une efficacité absolue de réseau polarisé électrique transversal d'ordre de diffraction +1 d'au moins 50 % à une longueur d'onde souhaitée du spectre de la lumière visible en réflexion, dans une plage de fonctionnement d'un angle d'incidence qui s'étend sur environ 20°.

2. Ensemble d'affichage proche de l'oeil de la revendication 1, dans lequel la cellule unitaire comprend au moins quatre méta-atomes.

3. Ensemble d'affichage proche de l'oeil de la revendication 1 ou 2, dans lequel le méta-réseau est sélectionné pour avoir une efficacité absolue de réseau polarisé électrique transversal d'ordre de diffraction +1 d'au moins 20 % sur une majorité du spectre visible en réflexion, dans une plage de fonctionnement d'un angle d'incidence qui s'étend sur environ 20°.

4. Ensemble d'affichage proche de l'oeil de l'une quelconque des revendications 1 à 3, dans lequel l'ensemble d'affichage de proximité comprend le combineur et le miroir secondaire.

5. Ensemble d'affichage proche de l'oeil de l'une quelconque des revendications 1 à 4, dans lequel chacun des méta-atomes a une dimension supérieure à 1 nm, de préférence une dimension supérieure à 10 nm.

6. L'ensemble d'affichage proche de l'œil de l'une quelconque des revendications 1 à 5, comprenant un combineur qui comprend une multitude d'ouvertures dimensionnées et espacées pour rendre le combineur sensiblement transparent à un observateur.

7. L'ensemble d'affichage proche de l'oeil de l'une quelconque des revendications 1 à 6, dans lequel le méta-réseau est sélectionné pour avoir une efficacité absolue de réseau polarisé électrique transversal d'ordre de diffraction +1 d'au moins 20% sur une majorité du spectre de la lumière visible en réflexion sur au moins un angle incident de 60°.

8. L'ensemble d'affichage proche de l'oeil de l'une quelconque des revendications 1 à 7, comprenant un combineur ayant une première surface réfléchissante et un miroir secondaire ayant une seconde surface réfléchissanté, dans lequel le combineur et le miroir secondaire comprennent tous deux une surface de forme libre.

9. Ensemble d'affichage proche de l'oeil de l'une quelconque des revendications 1 à 8, dans lequel la cellule unitaire a une longueur d'environ 555,5 nm et une largeur d'environ 221 nm,
dans lequel un premier méta-atome a une longueur d'environ 105 nm et une largeur d'environ 84,6 nm, un deuxième méta-atome a une longueur d'environ 105 nm et une largeur d'environ 47,7 nm, un troisième méta-atome a une longueur d'environ 50 nm et une largeur d'environ 177 nm et un quatrième méta-atome a une longueur d'environ 105 nm et une largeur d'environ 150 nm.

10. Ensemble d'affichage proche de l'œil de la revendication 1, dans lequel la surface nanostructurée comprend une surface de forme libre.

11. Ensemble d'affichage proche de l'oeil de la revendication 1, comprenant un cadre s'engageant de manière relégable avec la tête d'un porteur, et le combineur ayant une première surface rétroréfléchissante et le miroir secondaire ayant une seconde surface réfléchissante connectée de manière opérationnelle au cadre;
dans lequel au moins l'un du combineur et du miroir secondaire comprend une surface nanostructurée ayant un méta-réseau au moins partiellement dé-fini par une cellule unitaire ayant une pluralité de méta-atomes, les méta-atomes à l'intérieur de la cellule unitaire ayant des rapports longueur/largeur différents et étant dimensionnés et espacés pour fournir une efficacité de réseau absolue électrique transversale d'ordre de diffraction +1 prédéterminé donné sur une majorité du spectre de lumière visible en réflection,
dans lequel, de préférence, la source d'image est couplée optiquement au miroir secondaire le long d'un chemin optique et comprenant en outre un élément optique dans le chemin optique, dans lequel l'élément optique est un élément parmi une optique ou une lentille sphérique, asphérique, anamorphique, asphérique anamorphique ou de forme libre, et
dans lequel, de préférence encore, la cellule unitaire comprend quatre méta-atomes, chacun ayant un rapport longueur/largeur différent.

12. Ensemble d'affichage proche de l'oeil selon la revendication 11, dans lequel chacun du combineur et du miroir secondaire comprend une surface nanostructurée ayant un méta-réseau au moins partiellement défini par une cellule unitaire ayant une pluralité de méta-atomes, les méta-atomes à l'intérieur de la cellule unitaire ayant des rapports longueur sur largeur différents et étant dimensionnés et espacés pour fournir une efficacité absolue de réseau électrique transverse d'ordre de diffraction +1 d'au moins 20% sur une majorité du spectre de lumière visible en réflexion, et
dans lequel, de préférence, la surface nanostructurée comprend une combinaison à la fois d'une surface de forme libre et d'une surface nanostructurée.

13. L'ensemble d'affichage proche de l'oeil de la revendication 1, comprenant: un cadre;
dans lequel le combineur est connecté de manière opérationnelle au cadre en tant que première surface réfléchissante; et le miroir secondaire est connecté de manière opérationnelle au cadre en tant que seconde surface réfléchissante;
dans lequel chacun du combineur et du miroir secondaire comprend une surface nanostructurée de forme libre, dans lequel le composant de forme libre corrige les aberrations optiques induites par une inclinaison et un décentrage de la première surface réfléchissante et de la seconde surface réfléchissante;
dans lequel, de préférence, la surface nanostructurée de forme libre comprend une combinaison d'une surface de forme libre et d'une surface nanostructurée.

14. L'ensemble d'affichage proche de l'oeil de la revendication 1, comprenant le guide d'ondes couplé optiquement à la source d'image.
